(19) **Europäisches Patentamt / European Patent Office / Office européen des brevets**

(11) **EP 3 203 699 A1**

(12) **EUROPEAN PATENT APPLICATION**
published in accordance with Art. 153(4) EPC

(43) Date of publication:
**09.08.2017 Bulletin 2017/32**

(21) Application number: **15853757.1**

(22) Date of filing: **12.03.2015**

(51) Int Cl.:
**H04L 29/06** (2006.01)

(86) International application number:
**PCT/CN2015/074080**

(87) International publication number:
**WO 2016/065786 (06.05.2016 Gazette 2016/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.10.2014 CN 201410601880**

(71) Applicants:
• **Institute of Acoustics, Chinese Academy of Sciences**
  **Haidian District**
  **Beijing 100190 (CN)**
• **Beijing Intellix Technologies Co. Ltd.**
  **Beijing 100190 (CN)**

(72) Inventors:
• **ZHENG, Yanwei**
  **Beijing 100190 (CN)**
• **YUAN, Ding**
  **Beijing 100190 (CN)**
• **SONG, Lei**
  **Beijing 100190 (CN)**
• **YE, Xiaozhou**
  **Beijing 100190 (CN)**
• **ZHOU, Yuanfei**
  **Beijing 100190 (CN)**

(74) Representative: **Hanna Moore + Curley**
**Garryard House**
**25/26 Earlsfort Terrace**
**Dublin 2, D02 PX51 (IE)**

(54) **METHOD FOR MAN-IN-THE-MIDDLE PROCESSING FOR TCP WITHOUT PROTOCOL STACK**

(57) The present invention relates to a method for man-in-the-middle processing for TCP without a protocol stack. The method comprises: capturing a TCP data packet sent by a sending end to a receiving end, and then performing TCP/IP reassembly on the TCP data packet; afterwards, modifying a payload length of the TCP data packet; modifying TCP header information of the TCP data packet, the TCP header information comprising at least a sequence number and an acknowledgment number; and finally, buffering the TCP data packet and forwarding the TCP data packet to the receiving end.

FIG.3

EP 3 203 699 A1

**Description**

**TECHNICAL FIELD**

The present invention relates to the field of network communication, and in particular to a method of man-in-the-middle processing for TCP without a protocol stack.

**BACKGROUND OF THE INVENTION**

With the development of the internet, network transmission media become more and more diversified, and the network security problem gets more and more attention. As a kind of network attack, a man-in-the-middle attack is very covert and threatening. An attacker locates himself between an information sender and receiver, and processes interaction information between the two parties. However, in certain circumstances, the man-in-the-middle technique has merit. For example, the man-in-the-middle technique can monitor a cybercrime and shield illegal violent and pornographic information on the network to some extent.

The existing methods of man-in-the-middle processing for TCP all work in a normal TCP/IP protocol stack mode, and the man-in-the-middle monitors an interaction datagram between two ends by establishing two connections with the two ends respectively. This method has an advantage of simple implementation. Since the method works in the normal TCP/IP protocol stack mode, whenever a data packet is received, there is a need to submit successively the data packet to a network layer (IP protocol stack), a transport layer (TCP protocol stack) and an application layer for processing; afterwards, the data packet is encapsulated through the application layer, the transport layer (TCP) and the network layer (IP); finally, the data packet is forwarded. Obviously, the existing method of man-in-the-middle processing for TCP has a poorer real-time performance, which may affect the network throughput. Furthermore, the method may affect a normal interaction between the two ends.

**SUMMARY OF THE INVENTION**

An objective of the present invention is to overcome the defects that the method of man-in-the-middle processing for TCP in the prior art has a poor real-time performance and affects the normal interaction between a client and a service end, thereby provides a method of man-in-the-middle processing for TCP that has a good real-time performance and is transparent to a sending end and a receiving end.

In order to realize the above objective, the present invention provides a method of man-in-the-middle processing for TCP without a protocol stack comprising:

capturing a TCP data packet sent by a sending end to a receiving end, and then performing TCP/IP recombination on the TCP data packet; and then modifying a payload length of the TCP data packet; modifying TCP header information of the TCP data packet, the TCP header information comprising at least a sequence number and an acknowledgment number; finally buffering and forwarding the TCP data packet to the receiving end.

In the above technical solution, the method further comprises:

step S101, receiving a TCP data packet;
step S102, performing TCP/IP recombination of the TCP data packet;
step S103, judging whether the TCP data packet is a retransmitted packet through information of the TCP recombination, going to a retransmitted packet processing flow S108 if yes, otherwise going to a normal packet processing flow S104;
step S104, modifying the payload length of the data packet in accordance with a requirement, a variation value of the payload length being denoted as offset, and then going to step S105;
step S105, checking whether the TCP data packet carries an acknowledgment number, going to step S106 if yes, otherwise going to S107;
step S106, extracting a five-tuple of the TCP data packet, performing reverse hash lookup, acknowledging a reverse TCP flow, deleting the TCP data packet that has been acknowledged in a reverse buffer queue, and modifying the acknowledgment number of the TCP header, and then going to step S107;
step S107, performing forward hash lookup by the five-tuple of the TCP data packet, modifying the sequence number of the TCP header, inserting the packet into a tail of a forward buffer queue, and forwarding the packet forth, and then going to step S111;
step S108, determining that the TCP data packet is a retransmitted packet, judging whether the retransmitted packet has been acknowledged by the TCP man-in-the-middle processing module, going to step S109 if yes, otherwise going to step S110;

step S109, performing the reverse hash lookup by the five-tuple of the TCP data packet to find a corresponding TCP data packet in the reverse buffer queue, forwarding the corresponding TCP data packet in the buffer queue back, discarding an original TCP data packet, and then going to step S111;

step S110, performing the forward hash lookup by the five-tuple of the TCP data packet to find a corresponding TCP data packet in the forward buffer queue, forwarding the corresponding TCP data packet in the buffer queue forth, discarding the original TCP data packet, and then going to step S111; and

step S111, ending the processing of the TCP data packet.

In the above technical solutions, the reverse hash lookup performs hash match with a destination address, a destination port, a source address, a source port and a protocol type of the TCP data packet as value; the forward hash lookup performs hash match with the source address, the source port, the destination address, the destination port and the protocol type of the TCP data packet as value.

In the above technical solutions, in the step S107, the sequence number of the TCP header is modified in accordance with the following calculation formula:

$$\text{modified sequence number} = \text{sequence number before modification} + \text{accumulated offset};$$

wherein, accumulated offset = accumulated offset of TCP packet in tail of queue + offset of the TCP data packet.

In the above technical solutions, in the step S106, the acknowledgment number of the TCP header is modified in accordance with the following calculation formula: the acknowledgment number after modification = the expectation of acknowledgment number - accumulated offset; wherein, the expectation of acknowledgment number = modified sequence number + modified TCP payload length.

In the above technical solutions, in the step S108, the following method is employed to judge whether the TCP data packet is a retransmitted packet: if the sequence number of the TCP data packet is larger than a maximum sequence number value output in the TCP/IP recombination process, which is indicated that the TCP packet is not a retransmitted packet, otherwise the TCP packet is a retransmitted packet.

In the above technical solutions, the forwarding forth means that a forwarding direction is the same as a direction in which a source TCP data packet is sent; the forwarding back means that the forwarding direction is opposite to the direction in which the source TCP data packet is sent.

The advantages of the present invention exist in that:

1. the method of man-in-the-middle processing for TCP without a protocol stack of the present invention works without a protocol stack, a modification to the TCP data packet is transparent to the sending end and the receiving end, and does not affect the normal interaction between the sending end and the receiving end;

2. the method of man-in-the-middle processing for TCP without a protocol stack of the present invention accelerates the processing of the retransmitted packet to a certain extent by a buffer mechanism;

3. the method of man-in-the-middle processing for TCP without a protocol stack of the present invention can provide underlying technical support for other man-in-the-middle solutions based on TCP protocol.

**BRIEF DESCRIPTION OF THE DRAWINGS**

Fig. 1 is a basic flowchart of a method of man-in-the-middle processing for TCP without a protocol stack of the present invention;

Fig. 2 is a structural diagram of a buffering hash table employed in the method of man-in-the-middle processing for TCP without a protocol stack of the present invention;

Fig. 3 is a detailed flowchart of the method of man-in-the-middle processing for TCP without a protocol stack of the present invention;

Fig. 4 is an example diagram of modifying a sequence number and an acknowledgment number in the method for man-in-the-middle processing for TCP without a protocol stack of the present invention;

Fig. 5 is a schematic diagram of a transfer flow of a TCP data packet between a sending end and a receiving end.

**DETAILED DESCRIPTION OF THE INVENTION**

Now the present invention is further described in combination with the drawings.

A method of man-in-the-middle processing of the present invention does not employ TCP/IP protocol stack, and the method processes datagrams in the transport layer (TCP) and the application layer (of various protocols) directly in the network layer. In the present invention, a man-in-the-middle for TCP which is located between two network nodes in a communication network and employs the method of the present invention is called as a TCP man-in-the-middle module. When the two network nodes communicate with each other, the TCP man-in-the-middle module receiving, recombining, modifying, and forwarding TCP data packets flowing therethrough, and maintains a normal TCP connection. In this process, there is a need to modify values of a sequence number and an acknowledgment number of a TCP header according to a variation value in length of a TCP data packet before and after processed, and a normal interaction between a sending end and a receiving end is not affected.

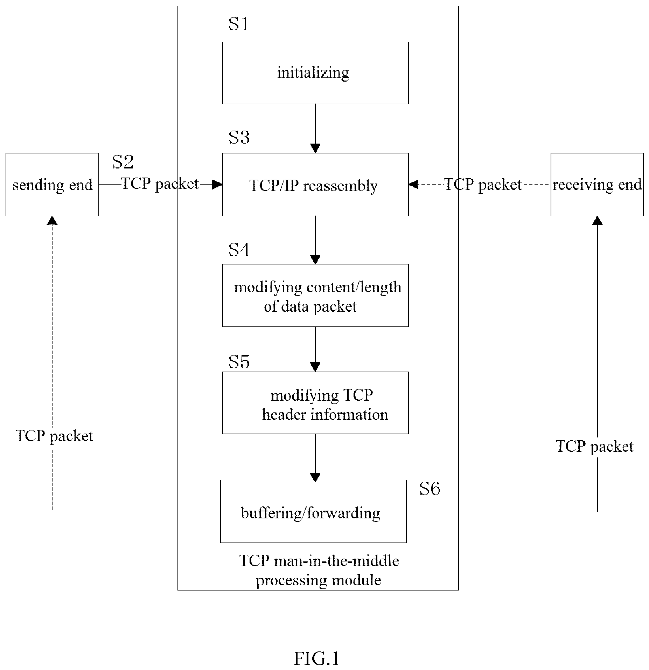

Referring to Fig. 1, the method of the present invention comprises:

step S1, initializing by a TCP man-in-the-middle processing module;

step S2, sending a TCP data packet from a sending end to a receiving end;

step S3, capturing the TCP data packet and performing TCP/IP recombination on the TCP data packet by the TCP man-in-the-middle processing module, to ensure the orderliness of the received TCP packet;

step S4, modifying a payload length of the TCP data packet by the TCP man-in-the-middle processing module;

step S5, modifying TCP header information of the data packet by the TCP man-in-the-middle processing module, the TCP header information comprising sequence number, an acknowledgment number and a checksum;

step S6, buffering and forwarding the TCP data packet to the receiving end by the TCP man-in-the-middle processing module.

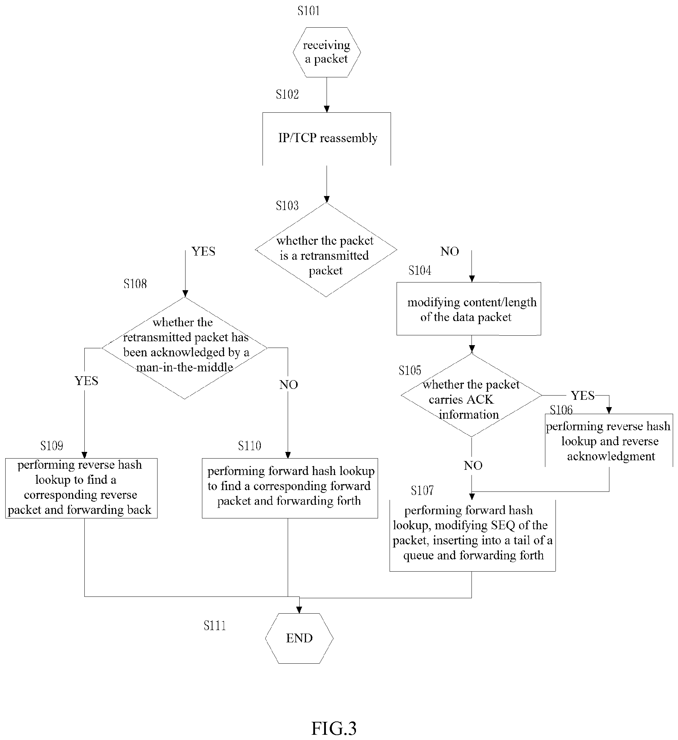

Referring to Fig. 3, the method of the present invention can be further subdivided into the following steps:

step S101, receiving a TCP data packet by the TCP man-in-the-middle processing module;

step S102, performing TCP/IP recombination on the TCP data packet by the TCP man-in-the-middle processing module;

a normal protocol stack can provide the function of TCP/IP recombination, however the method of the present invention does not employ the protocol stack, thus the current step needs to perform the TCP/IP recombination on the TCP data packet;

step S103, judging whether the TCP data packet is a retransmitted packet through information of the TCP recombination, going to a retransmitted packet processing flow S108 if yes, otherwise going to a normal packet processing flow S104;

step S104, modifying a payload length of the data packet in accordance with a respective requirement by the TCP man-in-the-middle processing module, a variation value of the payload length being offset, then going to step S105;

The method of the present invention is mainly applicable to the following case: after the data packet in the network layer is received, there is a need to find and modify corresponding data in a TCP payload according to a specific requirement (such as, the deletion of sensitive word). Thus the payload length of the data packet is modified in accordance with a respective requirement in the current step.

Step S105, checking whether the TCP data packet carries an acknowledgment number (ACK); going to step S106 if yes, otherwise going to step S107;

a TCP data packet may belong to two data flows in two directions, one is a sending end along receiving end direction, and the other is a receiving end along sending end direction. The acknowledgment number of the TCP data packet in each direction is the confirmation of the TCP data packet in the opposite direction, that is, if there is a TCP data packet in the sending end along receiving end direction that has an acknowledgment number, the acknowledgment number is the confirmation of a previous certain TCP data packet in the receiving end along sending end direction; and vice versa.

Step S106, extracting a five-tuple of the TCP data packet, performing reverse hash lookup, acknowledging a reverse TCP flow, deleting the TCP data packet that has been acknowledged in a reverse buffer queue, and modifying the acknowledged number of the TCP header, then going to step S107;

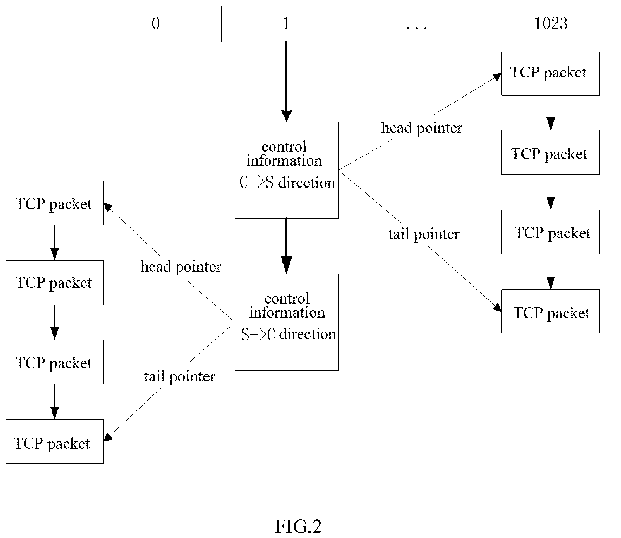

The five-tuple of the TCP data packet comprises: a source address, source port, destination address, destination port and protocol type. The reverse hash lookup is to perform hash match with the destination address, the destination port, the source address, the source port and the protocol type of the TCP data packet as value. The reverse buffer queue mentioned in the current step refers to a queue which is looked up by the reverse hash lookup. in Fig. 2, The TCP data packets pointed to by a head pointer and a tail pointer are a head and tail of a queue.

It is mentioned in the previous step S104 that, the TCP man-in-the-middle processing module may modify the payload length of the TCP data packet, thus, in order to maintain the accuracy of the sequence number and the acknowledgment number of the TCP data packet, there is a need to modify the sequence number and the acknowledgment number of the TCP data packet. In the subsequent step S107, the modification to the sequence number of the TCP data packet is completed, the TCP data packet with the modified sequence number is sent to the receiving end, the TCP data packet containing the acknowledgment number is returned by the receiving end, and then the modification to the acknowledgment number of the TCP header is achieved in this step.

The conformation of the TCP data packet can be achieved by comparing the acknowledgment number of the TCP packet with "the expectation of acknowledgment numbers" of various data packets in the reverse buffer queue. If the acknowledgment number of the TCP packet is the same as an "the expectation of acknowledgment number" of a certain data packet P1 in the reverse buffer queue, it is indicated that the TCP data packet is the conformation of the data packet P1. After the data packet is acknowledged, the acknowledgment number of the TCP packet is modified. A calculation formula is: acknowledgment number after modification = the expectation of acknowledgment number before modification - accumulated offset.

Step S107, performing forward hash look up by the five-tuple of the TCP data packet, modifying the sequence number of the TCP header, inserting the packet into a tail of a forward buffer queue, and forwarding the packet forth, then going to step S111;

The forward hash lookup is to perform hash match with the source address, the source port, the destination address, the destination port and the protocol type of the TCP data packet as value. The forward buffer queue mentioned in this step refers to a queue which is looked up by the forward hash lookup.

Forwarding forth mentioned in the present application represents that a forwarding direction is the same as the direction in which a source TCP data packet is sent.

In the current step, the sequence number of the TCP header is modified in accordance with the following calculation formula: modified sequence number = sequence number before modification + accumulated offset; wherein accumulated offset = accumulated offset of TCP packet in tail of queue + offset of the TCP data packet. After the sequence number of the TCP header is modified, there is a need to calculate the "the expectation of acknowledgment number" for the modified sequence number, the expectation of acknowledgment number = modified sequence number + modified TCP payload length; the modified TCP packet, the accumulated offset and the expectation of acknowledgment number are all stored in the buffer queue.

Step S108, determining that the TCP data packet is a retransmitted packet, judging whether the retransmitted packet has been acknowledged by the TCP man-in-the-middle processing module; going to step S109 if yes, otherwise going to step S110;

In the current step, the following method is employed to judge whether the TCP data packet is a retransmitted packet: if the sequence number of the TCP data packet is larger than a maximum sequence number value output in the TCP/IP reassembly process, it is indicated that the TCP packet is not the retransmitted packet, otherwise the TCP packet is the retransmitted packet.

Step S109, performing the reverse hash lookup by the five-tuple of the TCP data packet to find a corresponding TCP data packet in the reverse buffer queue, forwarding the corresponding TCP data packet in the buffer queue back, discarding the original TCP data packet, then going to step S111;

Forwarding back in the present application represents that the forwarding direction is opposite to the direction in which the source TCP data packet is sent.

Step S110, performing the forward hash lookup by the five-tuple of the TCP data packet to find a corresponding TCP data packet in the forward buffer queue, forwarding the corresponding TCP data packet in the buffer queue forth, and discarding the original TCP data packet, then going to step S111;

step S111, ending the processing of the TCP data packet.

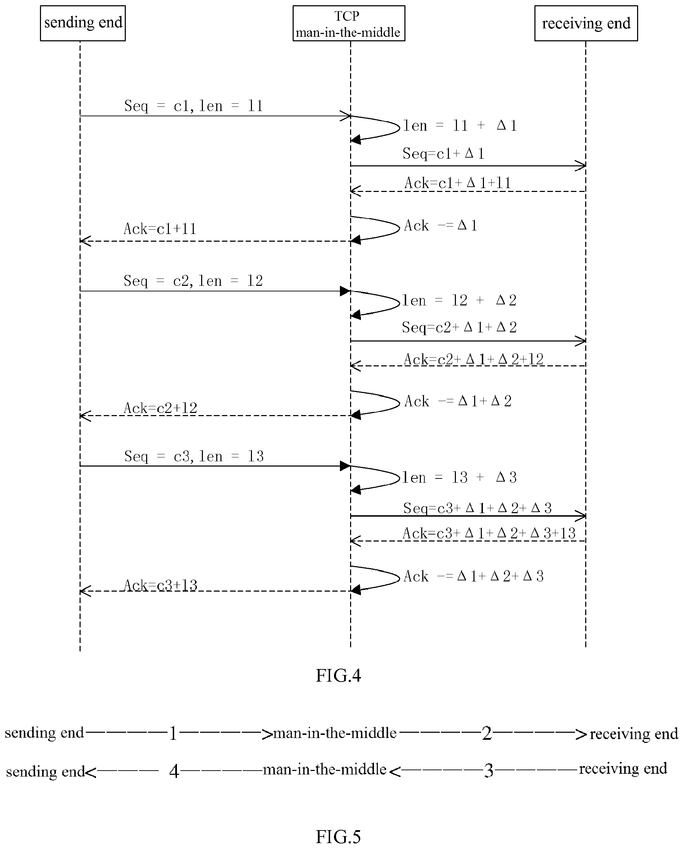

For ease of understanding, the method of the present invention will be further illustrated in combination with Fig. 4 below.

As shown in Fig. 4, a client first sends a TCP data packet with a sequence number (Seq) of c1 and a data packet length (len) of 11. A TCP man-in-the-middle module, after receiving the TCP data packet, performs TCP/IP recombination on the TCP data packet, and modifies the data packet length. It is assumed that the data packet length is increased by $\Delta_1$, then the modified data packet length is $11+\Delta_1$. In order to maintain the accuracy of the sequence number of the TCP data packet, the TCP man-in-the-middle module will also increase the sequence number of the TCP data packet by $\Delta_1$ before forwarding the TCP data packet, that is, the modified sequence number of the data packet is $c1+\Delta_1$. The TCP man-in-the-middle module sends the TCP data packet to a server after modifying the TCP data packet.

After receiving the aforementioned TCP data packet, the server returns a TCP data packet with an acknowledgment number represented as $c1+\Delta_1+11$. In order to maintain the accuracy of the acknowledgment number of the TCP data packet, there is a need to subtract $\Delta_1$ from the value of the acknowledgment number, then the new acknowledgment number is $c1+11$. The TCP man-in-the-middle module returns the TCP data packet with this acknowledgment number to the client.

The TCP man-in-the-middle module performs the same processing on the TCP data packet sent subsequently by the client, that is, the TCP man-in-the-middle module changes the length of a TCP data packet by $\Delta_i$ after receiving the data packet sent by the client, and then increases the sequence number of the TCP data packet by $\sum_{i=1}^{n} \Delta_i$ before forwarding in order to maintain the accuracy of the sequence number of the TCP data packet; upon the packet of acknowledgment number replied by the receiving end is received, subtracts respectively the value of the acknowledgment number in the TCP data packet by $\sum_{i=1}^{n} \Delta_i$, and then sends the packet of acknowledgment number to the sending end.

Fig. 5 describes a complete flow of a TCP data packet between a sending end and a receiving end. The steps S108-S110 of the method of the present invention described previously are illustrated complementally in combination with Fig. 5.

In Fig. 5, packet 1 represents a packet Packet1 sent by the sending end to the receiving end, packet 2 represents a packet Packet2 obtained after Packet1 is processed by a TCP man-in-the-middle module, packet 3 presents an acknowledgment packet Packet3 replied to the sending end by the receiving end after receiving Packet2, and packet 4 represents a packet Packet4 obtained after Packet 3 is processed by the man-in-the-middle.

When Packet3 is lost, the sending end may send a retransmitted packet Packet1. Since the man-in-the-middle does not receive Packet3, which mean that the retransmitted packet Packet1 is not acknowledged by the TCP man-in-the-middle processing module. At this point, according to the description of step S110, Packet2 corresponding to Packet1 is found in a forward buffer queue, and forwarded forth.

When the man-in-the-middle receives Packet3 and Packet 4 is lost, the sending end may also send a retransmitted packet Packet1. Since the man-in-the-middle has received Packet3,which mean that the retransmitted packet Packet1 has been acknowledged by the TCP man-in-the-middle processing module. At this point, according to the description of step S109, an acknowledgment packet Packet4 is found in a reverse buffer queue, and forwarded back.

Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope and spirit of the technical solutions of the present invention, and thereby should all be encompassed within the scope of the claims of the present invention.

**Claims**

1. A method of man-in-the-middle processing for TCP without a protocol stack, comprising:

   Capturing a TCP data packet sent by a sending end to a receiving end, then performing TCP/IP recombination on the TCP data packet; and then modifying a payload length of the TCP data packet; modifying TCP header information of the TCP data packet, the TCP header information comprising at least a sequence number and an acknowledgment number; finally buffering and forwarding the TCP data packet to the receiving end.

2. The method of man-in-the-middle processing for TCP without a protocol stack according to claim 1, **characterized in that**, the method further comprises:

   step S101, receiving a TCP data packet;
   step S102, performing TCP/IP recombination on the TCP data packet;
   step S103, judging whether the TCP data packet is a retransmitted packet through information of the TCP recombination, going to a retransmitted packet processing flow S108 if yes, otherwise going to a normal packet processing flow S104;
   step S104, modifying the payload length of the data packet in accordance with a requirement, a variation value of the payload length being denoted as offset, and then going to step S105;
   step S105, checking whether the TCP data packet carries an acknowledgment number, going to step S106 if yes, otherwise going to S107;
   step S106, extracting a five-tuple of the TCP data packet, performing reverse hash lookup, acknowledging a reverse TCP flow, deleting the TCP data packet that has been acknowledged in a reverse buffer queue, and modifying the acknowledgment number of the TCP header, and then going to step S107;
   step S107, performing forward hash lookup by the five-tuple of the TCP data packet, modifying the sequence number of the TCP header, inserting the packet into a tail of a forward buffer queue, and forwarding the packet forth, and then going to step S111;

step S108, determining that the TCP data packet is a retransmitted packet, judging whether the retransmitted packet has been acknowledged by the TCP man-in-the-middle processing module, going to step S109 if yes, otherwise going to step S110;

step S109, performing the reverse hash lookup by the five-tuple of the TCP data packet to find a corresponding TCP data packet in the reverse buffer queue, forwarding the corresponding TCP data packet in the buffer queue back, discarding an original TCP data packet, and then going to step S111;

step S110, performing the forward hash lookup by the five-tuple of the TCP data packet to find a corresponding TCP data packet in the forward buffer queue, forwarding the corresponding TCP data packet in the buffer queue forth, discarding the original TCP data packet, and then going to step S111; and

step S111, ending the processing of the TCP data packet.

3. The method of man-in-the-middle processing for TCP without a protocol stack according to claim 2, **characterized in that**, the reverse hash lookup performs hash match with a destination address, a destination port, a source address, a source port and a protocol type of the TCP data packet as value; the forward hash lookup performs hash match with the source address, the source port, the destination address, the destination port and the protocol type of the TCP data packet as value.

4. The method of man-in-the-middle processing for TCP without a protocol stack according to claim 2, **characterized in that**, in the step S107, the sequence number of the TCP header is modified in accordance with the following calculation formula:

$$\text{Modified sequence number} = \text{sequence number before modification} + \text{accumulated offset};$$

wherein, accumulated offset = accumulated offset of TCP packet in tail of queue + offset of the TCP data packet.

5. The method of man-in-the-middle processing for TCP without a protocol stack according to claim 4, **characterized in that**, in the step S106, the acknowledgment number of the TCP header is modified in accordance with the following calculation formula: the acknowledgment number after modification = the expectation of acknowledgment number - accumulated offset; wherein, the expectation of acknowledgment number = modified sequence number + modified TCP payload length.

6. The method of man-in-the-middle processing for TCP without a protocol stack according to claim 2, **characterized in that**, in the step S108, the following method is employed to judge whether the TCP data packet is a retransmitted packet: if the sequence number of the TCP data packet is larger than a maximum sequence number value output in the TCP/IP reassembly process, it is indicated that the TCP packet is not the retransmitted packet, otherwise, the TCP packet is the retransmitted packet.

7. The method of man-in-the-middle processing for TCP without a protocol stack according to claim 2, **characterized in that**, the forwarding forth means that a forwarding direction is the same as a direction in which a source TCP data packet is sent; the forwarding back means that the forwarding direction is opposite to the direction in which the source TCP data packet is sent.

FIG.1

FIG.2

S101

receiving
a packet

S102

IP/TCP reassembly

S103

whether the packet
is a retransmitted
packet

YES

NO

S108

S104

modifying content/length
of the data packet

whether the
retransmitted packet has
been acknowledged by a
man-in-the-middle

S105

YES

NO

whether the packet
carries ACK
information

YES

S106

performing reverse hash
lookup and reverse
acknowledgment

S109

S110

NO

performing reverse hash
lookup to find a
corresponding reverse
packet and forwarding back

performing forward hash lookup
to find a corresponding forward
packet and forwarding forth

S107

performing forward hash
lookup, modifying SEQ of the
packet, inserting into a tail of a
queue and forwarding forth

S111

END

FIG.3

```
sending end                  TCP                    receiving end
                        man-in-the-middle

         Seq = c1, len = l1
    ─────────────────────────────>
                              len = l1 + Δ1

                              Seq=c1+Δ1
                        ─────────────────────────────>
                              Ack=c1+Δ1+l1
                        <─────────────────────────────

                              Ack  -= Δ1
         Ack=c1+l1
    <─────────────────────────────

         Seq = c2, len = l2
    ─────────────────────────────>
                              len = l2 + Δ2

                              Seq=c2+Δ1+Δ2
                        ─────────────────────────────>
                              Ack=c2+Δ1+Δ2+l2
                        <─────────────────────────────

                              Ack  -= Δ1+Δ2
         Ack=c2+l2
    <─────────────────────────────

         Seq = c3, len = l3
    ─────────────────────────────>
                              len = l3 + Δ3

                              Seq=c3+Δ1+Δ2+Δ3
                        ─────────────────────────────>
                              Ack=c3+Δ1+Δ2+Δ3+l3
                        <─────────────────────────────

                              Ack  -= Δ1+Δ2+Δ3
         Ack=c3+l3
    <─────────────────────────────
```

FIG.4

```
sending end──────1──────>man-in-the-middle──────2──────> receiving end

sending end<────── 4──────man-in-the-middle<──────3──────receiving end
```

FIG.5

# INTERNATIONAL SEARCH REPORT

| | International application No. |
|---|---|
| | PCT/CN2015/074080 |

### A. CLASSIFICATION OF SUBJECT MATTER

H04L 29/06 (2006.01) i

According to International Patent Classification (IPC) or to both national classification and IPC

### B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

WPI, EPODOC, CNKI, CNPAT, IEEE: non-protocol stack, intermediary, TCP, network, safe, detect+, MITM, protocol, monitor

### C. DOCUMENTS CONSIDERED TO BE RELEVANT

| Category* | Citation of document, with indication, where appropriate, of the relevant passages | Relevant to claim No. |
|---|---|---|
| A | CN 103428199 A (INST INF ENG CAS) 04 December 2013 (04.12.2013) description, paragraphs [0004] to [0020] | 1-7 |
| A | CN 101188498 A (HUAWEI TECH CO., LTD. [CN]) 28 May 2008 (28.05.2008) the whole document | 1-7 |
| A | CN 101035135 A (UNIV TSINGHUA [CN]) 12 September 2007 (12.09.2007) the whole document | 1-7 |
| A | CN 101938741 A (DATANG MOBILE COMM EQUIP CO.) 05 January 2011 (05.01.2011) the whole document | 1-7 |
| A | EP 2595423 A1 (SWISSCOM AG) 22 May 2013 (22.05.2013) the whole document | 1-7 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 July 2015 | 29 July 2015 |

| Name and mailing address of the ISA | Authorized officer |
|---|---|
| State Intellectual Property Office of the P. R. China No. 6, Xitucheng Road, Jimenqiao Haidian District, Beijing 100088, China | LI, Mingyue |
| Facsimile No. (86-10) 62019451 | Telephone No. (86-10) 62413427 |

Form PCT/ISA /210 (second sheet) (July 2009)

## INTERNATIONAL SEARCH REPORT
### Information on patent family members

| International application No. |
| --- |
| PCT/CN2015/074080 |

| Patent Documents referred in the Report | Publication Date | Patent Family | Publication Date |
| --- | --- | --- | --- |
| CN 103428199 A | 04 December 2013 | None | |
| CN 101188498 A | 28 May 2008 | None | |
| CN 101035135 A | 12 September 2007 | None | |
| CN 101938741 A | 05 January 2011 | None | |
| EP 2595423 A1 | 22 May 2013 | US 2013132565 A1 | 23 May 2013 |

Form PCT/ISA/210 (patent family annex) (July 2009)